# EUROPEAN PATENT APPLICATION

(11) **EP 2 626 841 A1**
(43) Date of publication of application: **14.08.2013**
(21) Application number: 13153669.0
(22) Date of filing: 01.02.2013
(51) Int. Cl.: G07D 11/00, B60P 3/03

(54) **System and method for the secured transport of valuable goods, and corresponding vehicle**

(30) Priority: 09.02.2012 NL 2008268
(71) Applicant: Hartmann Spezialkarosserien GmbH, 36304 Alsfeld (DE)
(72) Inventor: Decker, Heinrich Immo, D-36304 Alsfeld (DE); Rensenbrink, Fred, 2593 CL Den Haag (NL)
(74) Representative: Klavers, Cornelis

(57) **Abstract**

A system for secured transport of valuable goods, comprises: a) a transport means, such as a car or an airplane, b) one of more portable valuable-goods cassettes, each provided with a reinforced envelope and additional securing means comprising tampering detectors and valuable-goods destruction means, which transport means is provided with a retaining device fixed to the transport means and suited for retaining a plurality of said valuable-goods cassettes, wherein the retaining device is provided with - fastening means suited for the releasable fastening of the valuable-goods cassettes to the retaining device, and - locking means suited for the locking and unlocking of the fastening means. The retaining device may be constructed such that only one of the valuable-goods cassettes fastened and locked to the retaining device is allowed to be unlocked per instance and may be provided with a non-armoured envelope with one opening sized to allow passage of one valuable-goods cassette at a time and provided with a closable and lockable entrance port in the exterior wall of the transport means and may also comprise a carrousel provided with a number of holders each suited for the securing of a valuable-goods cassette. A built in security system of valuable-goods cassettes is provided with control means for the changing of a security state of the security system of a valuable-goods cassette from its outside, wherein a state represents which tamper detector(s) is/are active and/or which actuator(s) can be activated by the control means.

## Description

The present invention relates to a system for the secured transport of valuable goods, a method for such transport and a corresponding vehicle.

Systems for the secured transport of valuable goods are known and are widely used for transporting valuable goods, such as cash money, jewelry or credit notes, in a secured manner, typically from a valuable-goods deposit location, such as a shop, to a secured building, such as a savings bank, or from a secured building to an ATM in or near shops.

In the present document, the term "secured transport" refers to those kinds of transport wherein provisions are made in order to prevent that unauthorized persons have access to the valuable goods being transported, such provisions typically consisting of (a) an armoured or reinforced closed envelope provided with a lock, possibly a time controlled lock, and/or (b) tampering detector means, and/or (c) means for destroying the valuable goods in the sense of eliminating its usability in the function of valuable goods, and/or (d) notifying or alarming the detection of tampering, and/or (e) guarding the valuable goods by persons. Access is allowed for upon authorization, for instance with the aid of a key or an access code.

One system of this type is known from the international patent application WO 2008/031115 A1. The valuable-goods transport security system disclosed therein comprises:
(a) a cash deposit terminal with a cash slot for receiving cash, in use, from a depositor; cash validation means, and securing means configured to automatically secure the validated cash in a suitable tamper-resistant enclosure for transport purposes; and
(b) a housing configured to eject the tamper-resistant enclosure upon receipt of authorized instruction to allow for transportation of said cash,
(c) a transport means for transporting the secured cash,
(d) a removal device configured to receive the transport, to validate the authenticity of said transport, and to automatically remove the cash from the transport so that the cash is transportable from the terminal to the removal device without direct human contact.

The enclosure for transport purposes, present in the cash deposit terminal, includes a liquid dyeing system for staining the valuable goods once activated, and a visual alarm, such as a smoke alarm, a flashing light, or the like.

The securing means is configured to secure the cash in a carousel-like structure which only allows one chamber of an enclosure for transport purposes to be loaded or unloaded at a time. The transport means includes a carousel-like enclosure having a plurality of chambers in which cash is securable.

The transport means includes a suitable cash-in-transit vehicle. The transport includes a safe for automatically receiving the cash once the authenticity of the enclosure has been validated. The safe is configured in a hopper fashion to allow the cash therein to be deposited onto a suitable conveyer system by opening doors in a floor portion of said safe.

The removal device includes a suitable vehicle ramp for receiving the transport so that the cash is automatically removable via a hopper fashion safe of the transport. The removal device includes a conveyor system for conveying cash removed from the transport to suitable cash processing apparatus.

Similarly to the enclosure for transport purposes, the vehicle includes countermeasures for impeding tampering with the cash held therein, e.g. a liquid dyeing system, GPS monitoring systems, alarm systems.

As the main idea of this publication it is mentioned that the valuable goods are in a closed chain in which it is never in reach of human persons. This has as an advantage that a higher degree of security is obtainable than with a non-closed chain, because thieves have no access and guards, either being threatened by thieves or tempted to steal the valuable goods by themselves, have no opportunity to get the valuable goods.

However, the security system described above still has the disadvantage that it is expensive and requires heavy equipment to obtain a sufficient level of security.

The invention aims at reducing these disadvantages. It has as goal to provide a system with reduced costs and for lighter equipment, while still maintaining the possibility to provide a closed chain in which no human being is able to have direct tactile contact with the valuable goods.

This goal is obtained by a system according to claim 1. Such a system needs, in contrast to the known system described above, no extensive and expensive securing means, such as a safe with an armoured envelope, in or on the transport means. The reason that this is no longer necessary, lies in the fact that the valuable-goods cassette itself is secured with a reinforced envelope as well as additional securing means comprising monitoring means and valuable-goods destruction means. When the valuable-goods cassette is put in the transport means, usually after the cassette is carried by a person from a shop or other valuable-goods deposit place, to the transport means, the valuable goods remain in the cassette, hence remain secured by the cassette.

Another advantage of the system according to the invention, is that the transport means itself needs less protection. In particular, no safe or armoured plating are needed, thereby reducing the total weight of the transport means significantly. In an embodiment where a van is used, weight reductions of at least several hundreds of kilo's are obtained, and in some cases more than a thousand kilo's. As a result of the weight reduction made possible, a further cost reduction becomes possible, in terms of operational costs of the transport means used. First of all, a lighter transport means is now possible. In case of an airplane, this produces large savings, both in the costs of the airplane and in the costs of the pilot, who needs a less expensive license. The same advantage holds for a road vehicle such as a car, van or truck as a transport means. In particular, in some cases and some countries, the driver of the vehicle may have a normal driving license, instead of a truck driving license. This allows more persons to serve as a driver. Moreover, a light vehicle will be able to reach more places than a heavy truck, due to limitations of size and weight on roads. Finally, when such a light vehicle enters a shop area or other valuable-goods deposit area, it will not disturb normal affairs as much as a heavy and usually bulkier truck would do.

In an advantageous embodiment, the system according to the invention is **characterized in that** the retaining device is constructed such that only one of the valuable-goods cassettes secured and locked to the retaining device is allowed to be unlocked per instance. This further reduces the chances of success for a potential thief, since the amount of time needed for unloading all the cassettes will then often take more time than a thief or robber will consider safe for him/her, at the normal locations of the transport means, such as on the road. Thus, the potential thief or robber will have to invest more, in more sophisticated methods, such as stealing the entire transport means and hiding it in order to gain time for the unloading of the cassettes.

In another embodiment, the system is **characterized in that** the retaining device is provided with a non-armoured envelope provided with one opening suited for removal of maximally one valuable-goods cassette at a time from the retaining device.

Although the valuable goods are secured in the valuable-goods cassettes themselves already, it is advantageous to withdraw them at least from the eye and thus from the attention of persons passing by the transport means. In this manner, they will be kept from attempts to obtain the valuable goods in the cassettes, either by violence against the cassettes or against the person(s) associated with the transport means.

It is also useful to provide a primary protection against efforts to steal the valuable-goods cassettes, by keeping them out of reach of passersby and thus preventing the security devices of the valuable-goods cassettes to be activated often; such activation will prevent the valuable goods from being stolen, it will unfortunately also bring significant costs in terms of a damaged valuable-goods cassette and ruined valuable goods.

In an embodiment, the opening is provided with a closable and lockable entrance port. The port may be part of the securing and locking means. This further increases the safety.

In another embodiment, the opening is provided in the exterior wall of the transport means, whereby it becomes possible to do the loading and unloading of valuable-goods cassettes onto the retaining device from the outside of the transport means, in particular a vehicle. This implies that it becomes possible to not allow persons, including guards, inside the transport means, and thus to not give them a place where they have the opportunity to tamper with the valuable-goods cassettes without being noticed. In the end, this translates to an increased security of the valuable-goods transport.

In an embodiment, the retaining device comprises a carrousel with a number of holders each suited for the securing of a valuable-goods cassette, wherein the opening is positioned adjacent the carrousel to allow access to only one of its holders at a time. A carrousel is a convenient mechanism for transporting the cassettes inside the transport means. Moreover, a carrousel makes it possible to select only one position for placing cassettes in the transport means and withdrawing them thereof.

In another embodiment, the built in security system of the valuable-goods cassettes is provided with:
- control means suited for the changing of a security state of the security system of valuable-goods cassette from its outside;
wherein a state represents which tamper detector(s) is/are active and/or which actuator(s) can be activated by the control means.

In this embodiment, it becomes possible to select an appropriate level of protection for the valuable-goods cassette, at least adapted to whether the cassette is located in the transport means or transported separate from that means, such as in the hand of a person. Advantageously, at least one of the valuable-goods cassettes is provided with control means capable of changing the security state of its security means, thereby allowing for at least the following security states:
- an "in hand - armed" state, in which a water detector, door open detector, penetration detector and a time counter are activated,
- an "in vehicle - armed" state, in which tamper detectors are activated other than those detecting movement,
- an "in safe - armed" state, in which tamper detectors are activated including a least one tamper detector detecting movement, and
- a "disarmed" state, in which no detectors are activated.

In another embodiment, at least one of the valuable-goods cassettes is provided with data storage means suited for storing data of at least one of the following data types:
- valuable-goods cassette security state,
- content (e.g., in terms of value and/or type),
- GPS-positions,
- owner ID of the content, and
- history data about the preceding data types.

The above types of data serve to provide improves security, and in particular allow for tracing what has happened and how, after an incident, such as stealing, with the cassette.

In an additional embodiment, the retaining device on the one hand and each of the valuable-goods cassettes on the other hand are provided with data communication means suited for mutually exchanging data, in particular data regarding the ID of the valuable-goods cassette, the type of content of the valuable-goods cassette, the value of the content of the valuable-goods cassette, the moment in time, the GPS-location of the transport means, and/or the ID of the transport means. Such data communication may, for instance, be wireless, or with a plug connection.

In a further embodiment, the retaining device is provided with communication means suited for automatically exchanging data with a remote device, other than the valuable-goods cassettes according to the system. For instance, a trusted third party such as a savings bank may comprise that remote device. Preferably, the communication means of the retaining device means are capable of communicating data of at least one of the following data types:
- entrance port status of the transport means (including open and locked),
- IDs of the valuable-goods cassettes present in the transport means, and
- actual GPS-position of transport means.

The invention further relates to a method for transporting valuable goods according to claim 13. With this method there is, in analogy with the system according to the invention, no need for a secured transport means, since the valuable-goods cassettes are secured themselves, both during transport separate from the transport means and during transport when they are attached and locked to the retaining device and thus to the transport means. The advantages are similar to those described above for the system.

In a variant of the method according to the invention, only one valuable-goods cassette is unlocked and released at a time. This further reduces the incentive for thieves to take action.

Other advantageous variants of the method are defined in the sub claims.

Finally, the invention relates to a vehicle according to claim 20. Such a vehicle allows for the method according to the invention, and may serve as a part of the system of the invention, thereby contributing to the advantages of the invention described above. The same holds for the embodiment in which only one of the valuable-goods cassettes fastened and locked to the retaining device is allowed to be unlocked per instance.

The invention will now be described into more detail under reference to the accompanying drawings, wherein similar items are provided with similar reference numbers.

In the drawing:
Figures 1a, 1b and 1c show schematic views of a first embodiment of the system according to the invention,
Figure 2 shows a schematic view of a retaining device suited to be applied in a second embodiment of the system according to the invention,
Figure 3a shows a schematic view in perspective of a van according to a third embodiment of the invention, having a circular carrousel as a retaining device,
Figure 3b shows a top view of the van of Figure 3a,
Figure 3c shows a view in perspective of the retaining device taken out of the van of Figure 3a.

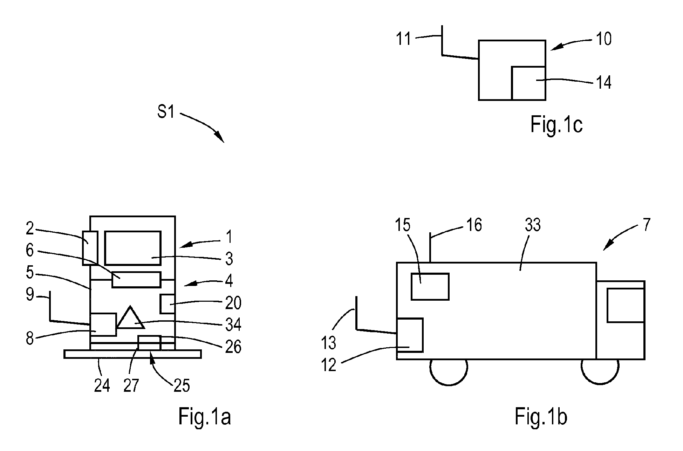

In Figure 1a, S1 refers to a system for the secured transport of cash money according to the invention. Not part of this system, but cooperating with it, is a cash deposit unit 1 with a lock 2 for individual units of cash as well as cash validation means 3 suited for validating of cash deposited through the lock 2 in the cash deposit unit 1.

A cash cassette 4 is part of the system S1, which cassette 4 is provided with cash destruction means (not shown) that secure the cash cassette 4 against attempts of tampering. The cash cassette 4 and the cash deposit unit 1 are mutually releasably fixed and surrounded by a reinforced housing 5, that, with the exception of the cash lock 6 therein, is closed, in other words not open for objects that could remove the cash present, such as a human hand, a screw driver or a piece of steel wire.

The system S1 further comprises a transport means, shown in Figure 1b, in the shape of a car 7 with cargo space 33, which car 7 is capable of transporting a number of cash cassettes 4, for instance to a bank building, in which secured environment the cash cassettes 4 may be emptied in a safe manner.

The car 7 is not drawn to the same scale in Figure 1b as the cash cassette 4 and the cash deposit means 1 in Figure 1a, but is shown smaller.

The cash cassette 4 has second electronic communication means 8, of which antenna 9 is part, which means 8 are suited to detect attempts of tampering by sensors of the cash cassette 4 that are not shown to a third party, such as a bank.

The system S1 also comprises in Figure 1c schematically shown first data communication and processing means 10 at a distance of the car and provided with antenna 11, wherein the car 7 comprises third communication means 12 with an antenna 13, suited for communicating the position of the car 7 to the data processing means 10, at the third party, in this example a bank, and the data processing means 10 comprise a securing program 14 that, on execution, compares the planned position of the car 7 at a given moment to the actual position thereof and automatically generates a message if the planned position and the actual position differ more than a predetermined threshold value. In that manner a raid on the car 7 can be traced quickly and it is possible to take swift action, if the raided car deviates from its planned route.

Further, a GPS-locator 15 with antenna 16 is present in the car 7, with which the real position of the car can be determined, in cooperation with the GPS-satellites of the GPS system, and this position is continuously or intermitted transmitted to the securing program 14.

The operation of the system will become clear on the basis of three stages: (1) cash cassette 4 located at a deposit point, (2) cash cassette during transport located in the hand of a guard from the deposit point to the car 7, and (3) cash cassette located in the retaining device in the car.

In the shop, the cash deposit unit is located near the cash register, anchored on foot 24, and cash money in the shape of bank notes or paper currency is deposit, in the lock 2 by either customers or shop employees. After automatic validation by the validation means 3, in this example an ECB-bank note reader, the accepted cash is automatically transferred to the cash cassette 4, via the cash lock 6; rejected cash is ejected. Deposits of accepted cash are passed on via wireless second electronic data communication means 8 to the data communication and processing means 10 of the bank, which is capable of precisely keeping track of the amount of money present, or supposed to be present, in the cash cassette 4. There the cash is secured by the reinforced envelope 5, the electronic second communication means 8, tamper sensors 20 and cash destruction means 34. The envelope 5 provides mechanical protection and the sensors 20 together with the second communication means 8 provide protection by informing the bank about tampering attempts on the one hand and on such attempts activating the built-in cash destruction means 34, after a waiting time, on the other hand.

The latter results in the bank notes in the cash cassette 4 to no longer satisfy the requirements of valid bank notes and thus to be of no use as cash, in this example by adding a colored ink to the notes. Said sensors 20 are acceleration sensors in this example. Other sensors, such as heat detecting sensors may be present in the cash cassette 4, in another embodiment, in order to detect arson.

When the cash deposit unit 1 is full, the cash cassette 4 is removed and taken away in the car 7 and replaced by an empty cash cassette 4.

During the transport of a cash cassette 4 to the car 7, the cassette is carried by a person, usually the driver of the car 7. The sensor, e.g. the acceleration sensor 20, has been deactivated automatically via an electrical data communication link 25 with plug 26 and socket 27, or its sensitivity has been reduced, because a certain amount of movement and acceleration is unavoidable when the cash cassette 4 with envelope 5 are being carried. In addition to the protection by the reinforced envelope 5, a timing clock (not shown) is active, which clock will activate the cash destruction means if these are not being deactivated within a preset time span, by means of a command. Thus, the cash cassette 'knows' when it is in the car 7, thereby allowing for a modification of the protection state of the cash cassette 4. The cash cassette 4 is capable of having the following states:
- an "in hand - armed" state, to be activated when the cash cassette 4 is carried in the hand, in which state a water detector, entrance open detector, penetration detector and a time counter are activated,
- an "in vehicle - armed" state, to be activated when the cash cassette 4 is in the vehicle and filled with cash, in which state a penetration detector and heat detector are activated, and the detector for movement is at a low sensitivity (or deactivated, optionally),
- an "in safe - armed" state, in which a detector detecting movement is activated, and
- a "disarmed" state, in which no detectors are activated.

Each cash cassette 4 has data storage means capable of storing data regarding the security state of the cassette, the value of the bank notes in the cassette in terms of how many notes of each type are present (examples of types are: a 20 Euro note, a 50 Euro note, a 10 US Dollar note), a history record of the GPS-positions at which the status was changed, and an ID of the owner of the content of the cash in the cash cassette.

Once the cash cassette 4 is near the car 7, second electronic communication means 8 come within the reach of the third electronic communication means 12, that pass on to the bank the information that the cash cassette 4 is near or in the car 7, via the data communication and processing means 10. The security status is changed to "in vehicle - armed", and the clock then is deactivated and the sensitivity of the sensor 20 is increased again, because the expected movements of the cash cassette 4 and its envelope 5 are less intense during transport in the car than during being carried by a person, generally speaking. If the movements become too intense, the sensor 20 detects this and sends an alarm signal and reactivates the timing clock, after which some time is allowed for the deactivation of the clock. The bank is also notified, via the electronic data communication means 9, 12 and 10, and the bank monitors the agreement of the planned route and the realized route, as mentioned before, it becomes possible to take action if a situation is judged as suspicious.

During the transport in the car 7, the cash being transported is in the cassettes 4 and protected by the reinforced envelope 5, the sensor 20 in combination with the timing mechanism, the route guarding software 14 and the first, second and third data communication means 8, 10 and 12.

Further, the car 7 itself is provided with an envelope, that serves as a first defense against theft, by camouflaging the presence of valuable content and by providing a physical first barrier to overcome before theft is possible. Furthermore, the envelope also serves to protect against weather influences, such as rain, snow, and sunshine. The envelope is not strictly necessary; the car could also be open.

In order to prevent that the cash cassette 4 can be removed from the car 7 without being noticed, contact is made between the communication means 8 and 12 regularly. If a request for such contact remains unanswered, this is notified to the bank, via the data communication and processing means, enabling further action.

It is noted that the cash deposit unit 1 and the cash cassette 4 are separable in Figure 1, but in another embodiment they are integrated and always transported together. The cash validation means than also travel together with the cash cassette, allowing for maintenance thereof in a safe environment, such as said bank. Moreover, there is less opportunity to tamper with the cash validation means in this manner.

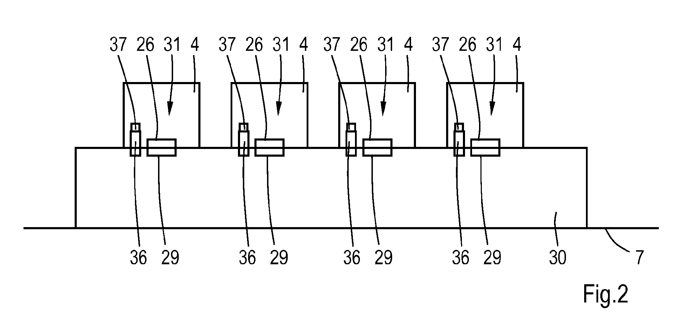

Figure 2 shows a retaining device 30 that is fixed to the cargo floor of car 7, in a variant of the embodiment of the system according to the invention shown in Figure 1.

In this embodiment, electronic detection means that serve to detect the presence of one or more cash cassettes in the car, an electrical data connection 31 between the retaining device 30 and the cash cassettes 4 positioned therein, and the third electronic communication means 12 are used only for the communication with the aforementioned bank. The electrical data connection 31 may consist of a plug 26 and socket 29.

A movable clamp 36, serving as a fastening means, extends from the retaining device 30 and engages a rod (not shown) of a cash cassette 4 as soon as that cash cassette 4 is put down on the retaining device 30. An electromagnetic lock 37 on the clamp 66 is capable of locking the clamp 36 in a position wherein it fastens a cash cassette 4.

In this embodiment, although not shown, the retaining device is provided with tampering detectors and smoke producing means as actuators, and a control device that activates the actuators in reaction to detection of tampering by the tampering detectors. The control device is also capable of controlling the electromagnetic lock 37 in such a manner that releasing the lock 37 is allowed only after authorization, based on the following data: (1) the ID of the cash cassette, (2) the identity of the person requesting the release, (3) the location of the transport means, and (4) the moment in time; the data is obtained from a data base in the bank mentioned at the first embodiment above, i.e. a data base outside the car. Moreover, the control device only allows for the unlocking of only the clamp 36 for a single cash cassette 4 at a time.

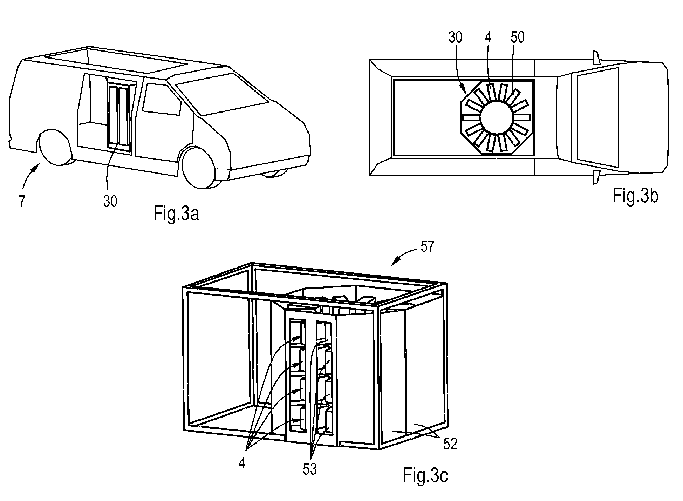

In Figures 3a and 3b, a van 7 according to a third embodiment of the invention is provided with a retaining device 30 fixed thereto that comprises four identical carrousels 50 in a vertical stack, each carrousel 50 capable of holding 26 cash cassettes 4 and of moving them around in the carrousel in a manner that is known per se.

In Figure 3c, the retaining device 30 of the third embodiment of Figures 3a and 3b is shown separated from the van, for the sake of clarity. It is visible that a frame 51 carries the device 50 and a wall 52 surrounds the device 50, leaving open only port 53 for a cash cassette 4 for each of the four carrousels 50.

Not shown in Figures 3a-c, but present, are data communication and processing means including control means, as well as tampering detection means and actuators similar to those in Figures 1 and 2. The operation of the system of van, retaining device and cash cassettes is also similar to the operation described for the Figures 1 and 2. Differences are that the carrousel is allowed to turn only, and the ports 53 are allowed to open only, after this is authorized by the bank described in the first embodiment; via the communication means and the GPS-sensors in the retaining device in the van, the bank checks at which location the van 7 is, and also the ID of the person near the door of the van via biometric identification means, as well-known in the art. Similar to the previous embodiments, the security status of a cash cassette is changed automatically during removal of the retaining device and during positioning it in the retaining device.

Several variants are possible to the embodiments above, while remaining within the scope of the claims. For instance, instead of the carrousel 50, a different type of mechanism may be chosen for positioning a cash cassette 4 near a slot 53; the person skilled in the art may use other mechanisms known from the field of warehouses, such as an XY-transport mechanism. Moreover, the cash cassette may be modified to hold other value goods, such as watches or diamonds.

## Claims

1. System (S1) for the secured transport of valuable goods, comprising:
a) a transport means (7), such as a car or an airplane,
b) one of more portable valuable-goods cassettes (4), each provided with a reinforced envelope (5) as well as additional securing means (1) comprising tampering detectors and valuable-goods destruction means,
which transport means (7) is provided with a retaining device (30) fixed to the transport means and suited for retaining a plurality of said valuable-goods cassettes (4),
the retaining device (30) is provided with:
- fastening means (36) suited for the releasable fastening of the valuable-goods cassettes (4) to the retaining device, and
- locking means (37) suited for the locking and unlocking of the fastening means,
a built in security system of said valuable-goods cassettes is provided with:
- control means suited for the changing of the security state of the security system of the valuable-goods cassette (4) from its outside;
wherein a state represents which tamper detector(s) is/are active and/or which of available actuator(s) the control means are capable of activating.

2. System (S1) according to claim 1, **characterized in that** at least one of the valuable-goods cassettes is provided with setting means suited to change the security state of its security system, thereby allowing for at least the following security states:
- an "in hand - armed" state, in which at least one tamper detector other than a movement detector, and a time counter are activated, a movement detector is deactivated or suppressed,
- an "in vehicle - armed" state, in which at least one tamper detector is activated other than those detecting movement, a movement detector is deactivated or given a reduced sensitivity,
- an "in safe - armed" state, in which at least one movement detector is activated, and
- a "disarmed" state, in which no detectors are activated.

3. System (S1) according to claim 1 or 2, **characterized in that** the retaining device (30) is provided with a non-armoured envelope provided with one opening sized to allow passage of maximally one valuable-goods cassette (4) at a time from the retaining device.

4. System (S1) according to claim 3, **characterized in that** the opening is provided with a closable and lockable entrance port.

5. System (S1) according to claim 3 or claim 4, **characterized in that** said opening is provided in the exterior wall of the transport means.

6. System (S1) according to one of the claims 3-5, **characterized in that** said retaining device (30) comprises a carrousel provided with a number of holders each suited for the securing of a valuable-goods cassette, wherein the opening is positioned adjacent the carrousel to allow access to only one of its holders at a time.

7. System (S1) according to one of the preceding claims, **characterized in that** the system is provided with data storage means having data structures for storing data of at least one of the following data types:
- valuable-goods cassette security state,
- content (e.g., in terms of value and/or type),
- GPS-positions,
- owner ID of the content, and
- history data about the preceding data types.

8. System (S1) according to one of the preceding claims, in which the retaining device on the one hand and each of the valuable-goods cassettes on the other hand are provided with data communication means suited for mutually exchanging data, in particular but not limited to: data regarding the ID of the valuable-goods cassette, the type of content of the valuable-goods cassette, the value of the content of the valuable-goods cassette, the moment in time, the GPS-location of the transport means, and/or the ID of the transport means.

9. System (S1) according to one of the preceding claims, in which the retaining device is provided with communication means suited for automatically exchanging data with a remote device, other than the valuable-goods cassettes according to the system.

10. System (S1) according to claim 9, **characterized in that** the communication means of the retaining device are capable of transmitting data of at least one of the following data types to a location outside the transport means:
- entrance port status of the transport means (including open and locked),
- valuable-goods cassette IDs of valuable-goods cassettes present in retaining device,
- actual GPS-position of transport means.

11. Method for transporting valuable goods in a transport means provided with a retaining device fixedly attached thereto or therein, comprising the following subsequent steps:
- the positioning of at least one valuable-goods cassette in the retaining device and locking it thereto, wherein each of the at least one valuable-goods cassettes is provided with and secured by automated securing means that include tampering means in cooperation with valuable-goods destruction means,
- relocating the transport device under continuance of the securing of the valuable-goods cassettes by the automated securing means, and
- releasing at least one of the previously positioned and locked valuable-goods cassettes from the retaining device,
Whereby the releasing is done after authorization, using at least one of the following data:
(1) the ID of the valuable-goods cassette,
(2) the identity of the person requesting the release,
(3) the location of the transport means, and (4) the moment in time; which data is/are obtained from a data base outside of the transport means.

12. Method according to claim 11, **characterized in that** a security status parameter is changed upon locking and unlocking the locking means of the valuable-goods cassette when the valuable-goods cassette is in position at or in the retaining means,
the security status parameter representing the degree of activation of a security means of the valuable-goods cassettes, other than armour plating, in particular detectors such as tampering detectors and actuators such as smoke producing means, and a control device for the actuators programmed to use input from the tampering detectors for controlling the actuators.

13. Method according to claim 12, **characterized in that** the security status parameter comprises at least the following values:
- an "in hand - armed" state, in which a water detector, door open detector, penetration detector and a time counter are activated,
- an "in vehicle - armed" state, in which tamper detectors are activated other than those detecting movement,
- an "in safe - armed" state, in which tamper detectors are activated including a least one tamper detector detecting movement, and
- a "disarmed" state, in which no tamper detectors are activated.

14. Method according to one of the claims 11-13, **characterized in that**:
- at the positioning and/or removal of a valuable-goods cassette at/from of the retaining device, data are automatically transmitted between the valuable-goods cassette and the retaining device, which data in particular comprise but are not limited to: data regarding the ID of the valuable-goods cassette, the type of content of the valuable-goods cassette, the value of the content of the valuable-goods cassette, the moment in time, the GPS-location of the transport means, and/or the ID of the transport means.

15. Vehicle for valuable-goods transport, comprising a system according to any one of the claims 1-10.
